# EUROPEAN PATENT APPLICATION

(11) **EP 1 750 374 A1**
(43) Date of publication of application: **07.02.2007**
(21) Application number: 05741412.0
(22) Date of filing: 18.05.2005
(51) Int. Cl.: H04B 1/16, H04J 11/00

(54) **RECEPTION DEVICE**

(30) Priority: 26.05.2004 JP 2004156020
(71) Applicant: Pioneer Corporation, Tokyo 153-8654 (JP)
(72) Inventor: TANI, Masanobu c/o Kawagoe koujou, Kawagoe-shi, Saitama 3508555 (JP)
(74) Representative: Sajda, Wolf E.
(86) International application number: PCT/JP2005/009094
(87) International publication number: WO 2005/117275

(57) **Abstract**

It is an object of the present invention to provide a receiver which, when receiving a digital broadcast, can shorten a time necessary for performing an initial synchronization.

The receiver comprises: a front end 3 which receives an OFDM-modulated digital broadcast and outputs modulation signals Sch1 and Sch2 of at least two channels, which modulation signals Sch1 and Sch2 are contained in the digital broadcast; a channel decoder 5a which receives one modulation signal Sch1 through an A/D converter 4a and obtains an initial synchronism to decode the modulation signal; a channel decoder 5b which receives the other modulation signal Sch2 through an A/D converter 4b and obtains an initial synchronism to decode the modulation signal. The channel decoders 5a and 5b, upon obtaining initial synchronisms, will mutually output and share synchronism signals LK1 and LK2. When one channel decoder is to newly obtain an initial synchronism, such an initial synchronism can be obtained in accordance with a synchronism signal outputted from the other channel decoder which has already obtained an initial synchronism, thereby shortening a time necessary for performing initial synchronization.

## Description

### Technical Field

The present invention relates to a receiver for receiving a digital radio broadcast, a digital television broadcast or the like, and also relates to a receiving method, a program for use in receiving, and a recording medium storing the program.

### Background Technique

As new broadcast media which can be used to replace conventional analog radio broadcast or conventional analog television broadcast, there have been in use a digital radio broadcast and a digital television broadcast using satellite waves as well as terrestrial waves.

These digital broadcasts have adopted an OFDM (Orthogonal Frequency Division Multiplexing) modulation technique in which a plurality of service information is frequency multiplexed and transmitted through narrow frequency bands of a plurality of channels assigned with transmission band widths, thereby effecting so-called multi-channel multi-media type digital broadcast.

On a receiver side which receives digital broadcasts, incoming radio waves are tune-received and select-received so as to generate a modulation signal in each channel, followed by performing synchronism detection and demodulation or the like so as to effect information separation, thereby reproducing service information in each channel.

For example, Japanese Unexamined Patent Application Publication No. 2002-94401 has disclosed a broadcast signal reception processing apparatus which receives a digital radio broadcast based on a DAB (Digital Audio Broadcasting) system that has been in practical use in Europe. The disclosed apparatus tune-receives and select-receives incoming radio waves to generate a modulation signal in each channel called Ensemble, and performs synchronism detection and demodulation so as to effect information separation, thereby reproducing service information such as weather report and traffic information transmitted from a broadcast station in each channel.

Furthermore, when the above-described broadcast signal reception processing apparatus is moving together with a mobile body such as an automobile or the like, if it becomes impossible to receive Ensemble during reception, a changeover will be performed in a manner such that an automatic seeking process will be carried out to search for an Ensemble of another channel having service information equivalent to the service information contained in the foregoing Ensemble, and selectively receive the searched other Ensemble, thus making it possible to reproduce service information having the same contents.

Patent Document 1: Japanese Unexamined Patent Application Publication No. 2002-94401.

### Description of the Invention

### Problem(s) to be Solved by the Invention

However, regarding the broadcast signal reception processing apparatus disclosed in Japanese Unexamined Patent Application Publication No. 2002-94401, when it becomes impossible to receive Ensemble during reception and the seeking process is carried out, once Ensembles of other respective channels are select-received, an initial synchronism will be obtained in accordance with control information data contained in the select-received Ensembles , and under a condition in which an initial synchronism has been obtained, processing is repeated to judge whether the select-received Ensembles are Ensembles having service information of the same contents.
As a result, whenever a channel changeover is performed by virtue of selective reception, since the foregoing initial synchronism has to be obtained, there has been a problem that a long time is needed in finding Ensemble of another channel having the service information of the same contents.

The present invention has been accomplished in view of the above-discussed conventional problem and it is an object of the invention to provide a receiver which, when a channel being used in reception has become unable to receive information and thus a new initial synchronization becomes necessary, can shorten the time necessary for performing an initial synchronization.

### Means for Solving the Problem

A receiver of the present invention recited in claim 1 comprises: reception means for receiving digital broadcast and outputting modulation signals of at least two channels, the modulation signals being contained in the digital broadcast; first channel decoder means for obtaining an initial synchronism to decode one modulation signal among the modulation signals outputted from the reception means; and second channel decoder means for obtaining an initial synchronism to decode another modulation signal of the modulation signals. Specifically, the first and second channel decoder means share synchronism detection results in initial synchronism with each other.

A receiving method of the present invention recited in claim 2 comprises: a receiving process of receiving digital broadcast and outputting modulation signals of at least two channels, the modulation signals being contained in the digital broadcast; a first channel decoder process of obtaining an initial synchronism to decode one modulation signal among the modulation signals; and a second channel decoder process of obtaining an initial synchronism to decode another modulation signal of the modulation signals. Specifically, the first and second channel decoder processes share synchronism detection results in initial synchronism with each other.

An invention recited in claim 3 is a program for use in a receiver which includes reception means for receiving digital broadcast and outputting modulation signals of at least two channels, which modulation signals are contained in the digital broadcast, and which receiver is provided to apply a computer processing to the modulation signals. This program comprises: a first channel decoder step of obtaining an initial synchronism to decode one modulation signal among the modulation signals outputted from the reception means; and a second channel decoder step of obtaining an initial synchronism to decode another modulation signal of the modulation signals. Specifically, the first and second channel decoder steps share synchronism detection results in initial synchronism with each other.

An invention recited in claim 4 is an information recording and reproducing medium having recorded therein a program recited in claim 3.

### Brief Description of the Drawings

- Fig. 1: is a block diagram showing a composition of the digital broadcast receiver according to an embodiment of the present invention.
- Fig. 2: is a block diagram showing a composition of the digital broadcast receiver according to an example which is more detailed than the embodiment.
- Fig. 3: is a flow chart showing an operation of the digital broadcast receiver shown in Fig. 2.

### Best Mode of Carrying Out the Invention

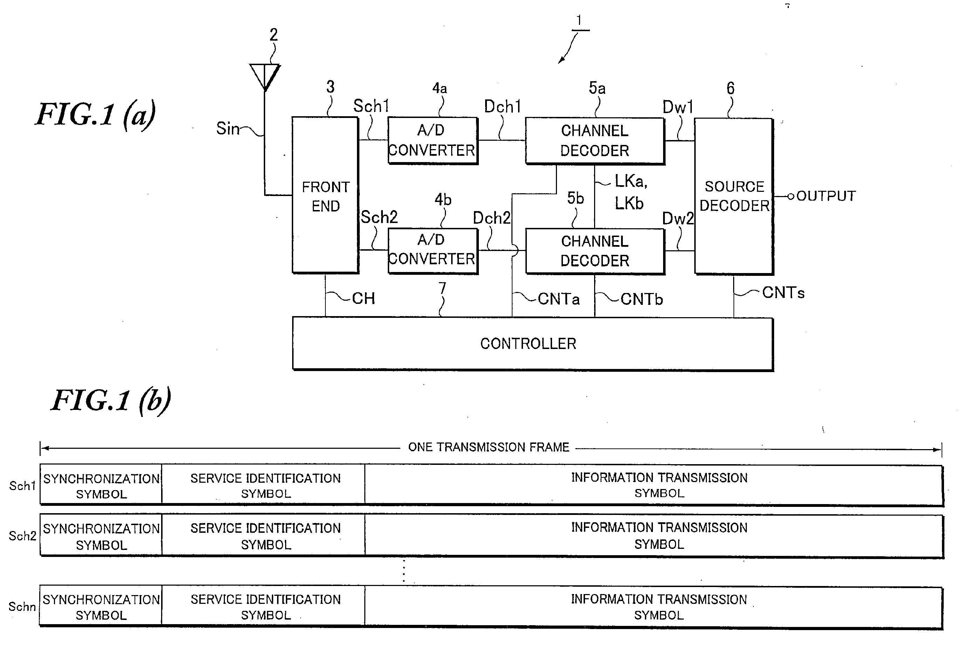

Next, description will be given to explain a receiver formed according to an embodiment of the present invention. Fig. 1(a) is a block diagram showing a composition of the digital broadcast receiver of the present embodiment, and Fig. 1(b) is a view schematically showing a composition of a broadcast signal modulated in accordance with OFDM modulation manner.

As shown in Fig. 1(a), the receiver (hereinafter, referred to as "digital broadcast receiver") 1 comprises a front end 3 serving as receiving means connected with an antenna 2 which receives broadcast radio wave, A/D-converters 4a and 4b, channel decoders 5a and 5b, a source decoder 6, and a controller 7.

The front end 3 tune-receives a reception signal Sin generated in the antenna 2, so as to produce multi-channel modulation signals whose frequencies have been converted into intermediate frequencies. Then, the multi-channel modulation signals are selectively received so as to output a modulation signal consisting of an intermediate frequency in each channel.

Here, the front end 3 performs a tune-reception in accordance with a local oscillation frequency specified by a reception control signal CH supplied from the controller 7, thereby selectively receiving and thus outputting a modulation signal of a channel specified by the reception control signal CH.
When mutually different channels ch1 and ch2 are designated as channels for selective reception, as shown in Fig. 1(a), a modulation signal Sch1 of the channel ch1 and a modulation signal Sch2 of the channel ch2 will be selected. On the other hand, if other channels are designated, modulation signals of the designated channels will be selected and thus outputted.

However, in order to effect an easy explanation, the following description will be based on an example in which channels ch1 and ch2 are designated.

The A/D-converters 4a and 4b will A/D convert the modulation signals Sch1 and Sch2 (outputted from the front end 3) of mutually different channels into modulation signals Dch1 and Dch2 consisting of digital data trains, and supply them to the channel decoders 5a and 5b.

The channel decoders 5a and 5b, after obtaining an initial synchronism (so-called frame synchronism) with a synchronization symbol contained in the modulation signals Dch1 and Dch2, will demodulate service identification symbol and information transmission symbol following the synchronization symbol, thereby generating and thus outputting demodulation signals Dw1 and Dw2.

Namely, as schematically shown in Fig. 1(b), the demodulation signals Sch1 to Schn of the respective channels transmitted from a broadcast station are such that each transmission frame comprises a synchronization symbol, a service identification symbol, and an information transmission symbol. Further, synchronization symbols of the respective demodulation signals Sch1 to Schn are synchronized and transmitted from the broadcast station.

In detail, the channel decoder 5a, after obtaining an initial synchronism with a synchronization symbol contained in the modulation signal Dch1, applies a demodulation or the like to the service identification symbol and the information transmission symbol, thereby outputting a demodulation signal Dw1.
On the other hand, the channel decoder 5b, after obtaining an initial synchronism with a synchronization symbol contained in the modulation signal Dch2, applies a demodulation or the like to the service identification symbol and the information transmission symbol, thereby outputting a demodulation signal Dw2.

Furthermore, the channel decoder 5a, upon obtaining an initial synchronism, generates a synchronism signal LKa as a synchronism detection result and supplies the signal to the channel decoder 5b. Similarly, the channel decoder 5b, upon obtaining an initial synchronism, generates a synchronism signal LKb and supplies the signal to the channel decoder 5a.
Then, when one of the channel decoders 5a and 5b fails to obtain an initial synchronism in accordance with a demodulation signal supplied from the A/D-converters 4a and 4b, it can be supposed that an initial synchronism has been automatically obtained in accordance with a synchronism signal supplied from the other of the channel decoders 5a and 5b, thereby quickly starting a decoding process for demodulating the service identification symbol and the information transmission symbol.

For example, when a deterioration occurs in a reception quality with respect to a demodulation signal Dw1 of channel ch1 due to an influence of a multipass fading or the like, it is necessary for the channel decoder 5a to newly obtain an initial synchronism with respect to the demodulation signal Dw1.
At this time, if the channel decoder 5b has already obtained an initial synchronism with respect to the demodulation signal Dw2, the channel decoder 5a will receive a synchronism signal LKb supplied from the channel decoder 5b, thereby finishing the initial synchronization at an assumption that an initial synchronism has been obtained with respect to the demodulation signal Dw1.
In contrast, when deterioration occurs in a reception quality with respect to a demodulation signal Dw2 of channel ch2 due to an influence of a multipass fading or the like, it is necessary for the channel decoder 5b to newly obtain an initial synchronism with respect to the demodulation signal Dw2.
At this time, if the channel decoder 5a has already obtained an initial synchronism with respect to the demodulation signal Dw1, the channel decoder 5b will receive a synchronism signal LKa supplied from the channel decoder 5a, thereby finishing the initial synchronization at an assumption that an initial synchronism has been obtained with respect to the demodulation signal Dw2.

In this way, the channel decoders 5a, 5b mutually share the synchronism signals LKa, LKb and obtain initial synchronisms, thereby allowing the two channel decoders to quickly finish initial synchronization.

The source decoder 6 decodes the coded and compressed demodulation signals Dw1, Dw2, thus returning these signals into so-called expanded audio signal, video signal and various other data and thus outputting the same.

The controller 7 is formed of a microprocessor (MPU) which carries out a predetermined system program. Once a desired broadcast station and a desired channel are specified by a user, the controller 7 will supply a reception signal CH to the front end 3 and will control the channel decoders 5a, 5b and the source decoder 6 by virtue of various control signals CNTa, CNTb, and CNTs.

As described above, according to the digital broadcast receiver 1 of the present embodiment, since the channel decoders 5a, 5b are mutually sharing synchronism signals LKa and LKb, even when one channel decoder fails to obtain an initial synchronism or when it is necessary to newly obtain an initial synchronism, it is possible to obtain an initial synchronism in accordance with an initial synchronism signal supplied from the other channel decoder, thus making it possible to shorten a time necessary in obtaining an initial synchronism.

In the present embodiment, modulation signals of two channels are outputted from the tuner unit 3 and subjected to a decoding processing such as demodulation by virtue of the two channel decoders 5a and 5b. However, the present invention should not be limited by this.
For example, it is also possible to output modulation signals of three channels from the tuner unit 3, perform a decoding process such as demodulation by virtue of three or more channel decoders. Once the respective channel decoders obtain respective initial synchronisms, synchronism signals will be generated, thereby sharing and thus using the respective synchronism signals.

Moreover, it is also possible for the channel decoders 5a, 5b and the source decoder 6 to be formed of microprocessor (MPU) in the same way as the controller 7, or to be formed of integrated circuit having operation processing function such as digital signal processor (DSP), thereby executing a predetermined system program (computer program). In this way, it is possible to exhibit the functions of the foregoing channel decoders 5a, 5b or the like and the source decoder 6.

Moreover, it is also possible to provide an information reproducing device in the receiver 1 of the present embodiment, which reproducing device can read and thus reproduce information recorded in a storage medium (information recording medium) such as CD (Compact Disc), DVD (Digital Versatile Disc) and semiconductor memory, thereby using the information reproducing device to reproduce information recording medium storing a computer program having functions of the channel decoders 5a, 5b or the like, the source decoder 6, and the controller 7, and installing the program in the foregoing microprocessor or digital signal processor (DSP) and thus executing the same.

### Example

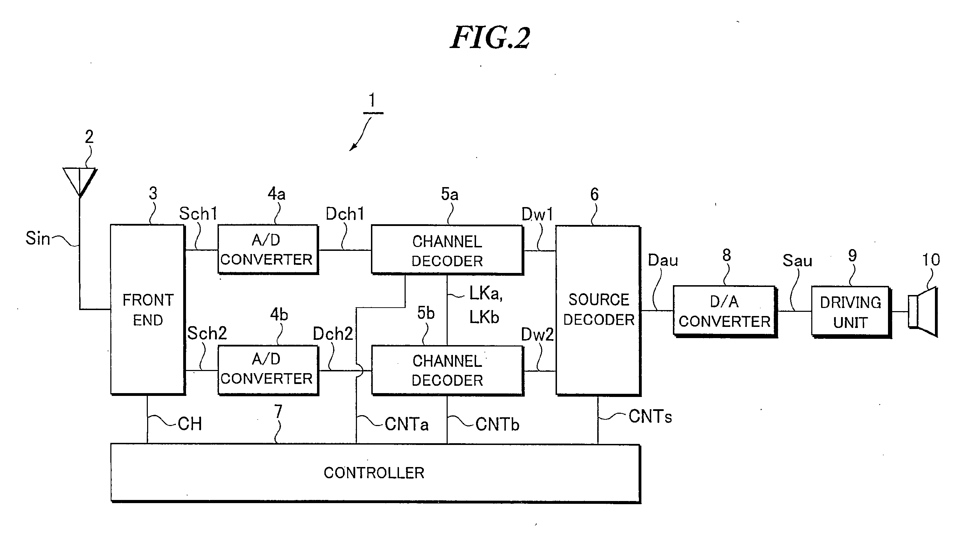

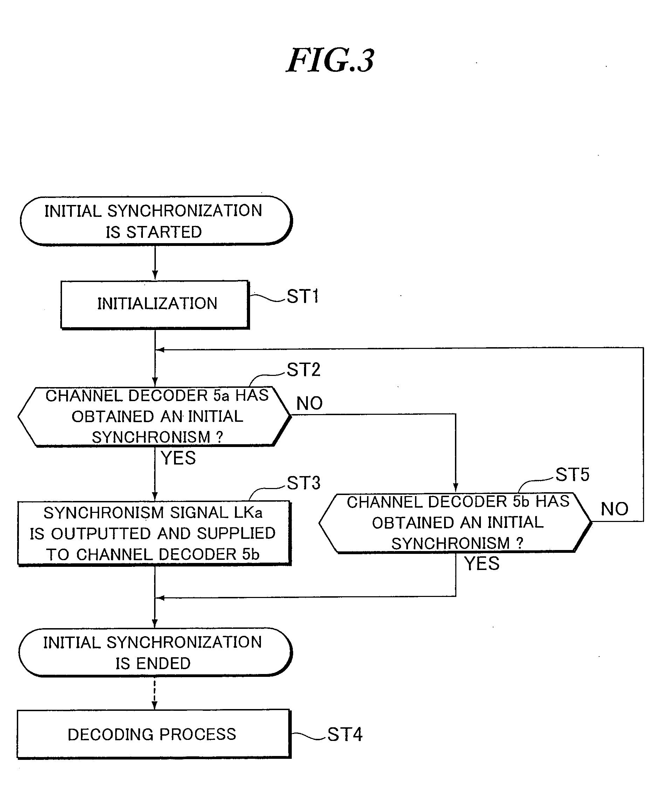

Next, description will be given to explain a more detailed example with reference to Figs. 2 and 3. Fig. 2 is a block diagram showing a constitution of the receiver of this example, while elements identical as or equivalent to those in Fig. 1(a) are represented by the same reference numerals. Fig. 3 is a flow chart showing an operation of the receiver of this example.

As shown in Fig. 2, this receiver (digital broadcast receiver) is similar to the digital broadcast receiver shown in Fig. 1(a) and comprises: a front end 3 connected with an antenna 2 which receives a broadcast radio wave that is an incoming digital radio broadcast, A/D-converters 4a and 4b, channel decoders 5a and 5b, a source decoder 6, and a controller 7. The receiver further comprises: a D/A converter 8 connected to the output of the source decoder 6; a driving unit 9; and a speaker.

The front end 3 tune-receives a reception signal generated in the antenna 2 in accordance with a local oscillation frequency specified by the reception control signal CH supplied from the controller 7, thereby selectively receiving and thus outputting a demodulation signal of a channel specified by the reception control signal CH.
For example, when mutually different channels ch1 and ch2 have been specified as channels for selective reception, the demodulation signal Sch1 of the channel ch1 and the modulation signal Sch2 of the channel ch2 are selected and thus outputted, while the A/D converters 4a and 4b will A/D-convert the modulation signals Sch1 and Sch2 into modulation signals Dch1 and Dch2 consisting of digital data trains, and supply the signals to the channel decoders 5a and 5b.

The channel decoders 5a and 5b, after obtaining an initial synchronism (so-called frame synchronism) with a synchronization symbol contained in the modulation signals Dch1 and Dch2, will carry out demodulation or the like on service identification symbol and information transmission symbol following the synchronization symbol, thereby generating and thus outputting the demodulation signals Dw1 and Dw2.

Namely, in the same manner as shown in Fig. 1(b), the modulation signals Sch1 to Schn of the channels ch1 to chn which are transmitted from a radio broadcast station are such that any one transmission frame comprises a synchronization symbol, a service identification symbol and an information transmission symbol following the synchronization symbol, synchronizes the synchronization symbols of modulation signals Sch1 to Schn, and is transmitted from the broadcast station.

Then, the channel decoder 5a, after obtaining an initial synchronism with a synchronization symbol contained in the modulation signal Dch1, applies a demodulation or the like to the service identification symbol and the information transmission symbol so as to output the demodulation signal Dw1.
The channel decoder 5b, after obtaining an initial synchronism with a synchronization symbol contained in the modulation signal Dch2, applies a demodulation or the like to the service identification symbol and the information transmission symbol so as to output the demodulation signal Dw2.

Furthermore, the channel decoder 5a, upon obtaining an initial synchronism, generates a synchronism signal LKa and supplies the same to the channel decoder 5b. Similarly, the channel decoder 5b, upon obtaining an initial synchronism, generates a synchronism signal LKb and supplies the same to the channel decoder 5a.
Then, when it has become impossible to obtain an initial synchronism in accordance with demodulation signals supplied from the A/D converters 4a and 4b, it can be assumed that one of the channel decoders 5a and 5b has automatically obtained an initial synchronism in accordance with a synchronism signal supplied from the other of the channel decoders 5a and 5b, thereby quickly starting a decoding process to apply a demodulation or the like to the service identification symbol and the information transmission symbol.

In this way, the channel decoders 5a and 5b share the synchronism signals LKa, LKa and obtain initial synchronisms, thereby allowing themselves to quickly completing the initial synchronization.

The source decoder 6 decodes the modulation signals Dw1 and Dw2 which have been coded and compressed, and returns the decoded signals back into so-called data-expanded audio signals Dau. Then, the D/A converter 8 converts the audio signals Dau into analogue audio signal Sau, while the driving unit 9 power-amplifies the audio signal and supplies the same to the speaker 10, thereby reproducing and thus outputting music or the like transmitted from a broadcast station.

The controller 7 is formed of a microprocessor (MPU) which carries out a predetermined system program. In this way, once a desired broadcast station and a desired channel are specified by a user, a reception control signal CH will be supplied to the front end 3, while various control signals CNTa, CNTb, and CNTs will function to control the operations of the channel decoders 5a, 5b and the source decoder 6.

Next, description will be given to explain an operation of the digital broadcast receiver 1 having the above-discussed constitution, with reference to Figs. 2 and 3.

At first, description will be given to explain a basic operation with reference to Fig. 2. Namely, once a user operates an operating section (not shown) to specify a desired broadcast station and a desired channel in the broadcast station, the controller 7 will supply a reception control signal CH indicating the specified broadcast station and the specified channel to the front end 3, thereby effecting a tuned reception as well as a selected reception.

In this way, when the front end 3 performs a tuned reception and a selected reception, when for example a specified channel is channel ch1, the modulation signal Sch1 of the channel ch1 will be outputted to the A/D converter 4a, while the modulation signal Sch2 of another channel (such as channel ch2) different from the specified channel ch1 will be outputted to the A/D converter 4b.

Then, the A/D converters 4a and 5a will convert the modulation signals Sch1 and Sch2 into the modulation signals Dch1 and Dch2 consisting of respective data trains and supply the same to the channel decoders 5a and 5b.

Furthermore, the channel decoders 5a and 5b will apply a demodulation or the like to the respective modulation signals Dch1 and Dch2 to generate demodulation signals Sw1, Sw2 and supply the same to the source decoder 6. Then, the source decoder 6 applies a decoding process on the demodulation signals Sw1 and Sw2 so as to reproduce audio signal such as music or the like transmitted through the respective channels ch1 and ch2.
Meanwhile, the audio signal Dau in relation to the specified channel ch1 is outputted, the D/A converter 8 converts the audio signal Dau into an analog audio signal Sau, while the driving unit 9 power-amplifies the audio signal Sau which is then supplied to the speaker 10, thereby reproducing a music or the like.

Here, when a reception quality in relation to a demodulation signal Dw1 of the channel ch1 becomes worse and it becomes necessary for the channel decoder 5a to newly obtain an initial synchronism with respect to the demodulation signal Dw1, a processing will be carried out to obtain an initial synchronism in accordance with a flow chart shown in Fig. 3.

Namely, once the channel decoder 5a starts a processing to newly obtain an initial synchronism with respect to the demodulation signal Dw1, an initialization is performed at step ST1 to process previously set timing information of an initial synchronism. Then, at step ST2, a processing is performed to obtain an initial synchronism in relation to the demodulation signal Dw1 of the channel ch1.

Here, a correlating operation with a synchronization symbol contained in the demodulation signal Dw1 is performed. If a correlative value is larger than a predetermined threshold, it can be judged that an initial synchronism has been obtained and the process will proceed to step ST3. At step ST3, a synchronism signal LKa is generated and supplied to the channel decoder 5a.
Then, the process proceeds to step ST4 to apply a demodulation or the like to the modulation signal Dch1 so as to generate a demodulation signal Sw1. Furthermore, decoding or the like is applied to the demodulation signal Sw1 which is then returned back to an audio signal Dau such as a music transmitted by virtue of channel ch1.

In the above-mentioned step ST2, if a result of the correlating operation with a synchronization symbol contained in the demodulation signal Dw1 shows that a correlative value is smaller than a predetermined threshold, the process will proceed to step ST5. Then, at step ST5, a judgment is performed to judge whether the synchronism signal LKb has already been outputted from the channel decoder 5b. If the synchronism signal LKb has already been outputted, the synchronism signal LKb will be inputted so as to finish a process of initial synchronization.
Subsequently, the process proceeds to step ST4. At step ST4, demodulation or the like is applied to the modulation signal Dch1 so as to generate the demodulation signal Sw1. Furthermore, decoding or the like is applied to the demodulation signal Sw1 which is then returned back to an audio signal Dau such as a music transmitted by virtue of channel ch1.

On the other hand, at step ST5, if the synchronism signal LKb has not been outputted from the channel decoder 5b, the process will go back to step ST2, thereby repeating the above-discussed steps. Then, if the channel decoder 5a has automatically obtained an initial synchronism, the initial synchronization will be finished at Steps ST2 and ST3, thereby starting a processing of step ST4. Further, if the channel decoder 5b has obtained an initial synchronism, the channel decoder 5a will finish an initial synchronization in steps ST2 and ST5, thereby starting the processing of step ST4.

As described above, according to the digital broadcast receiver 1 of the present embodiment, since the channel decoders 5a and 5b share the synchronism signals LKa and LKb, when one channel decoder fails to obtain an initial synchronism or when it becomes necessary to newly obtain an initial synchronism, it is possible to obtain an initial synchronism in accordance with an initial synchronism signal supplied from the other channel decoder, thereby making it possible to shorten a time needed in initial synchronization.

Moreover, when the digital broadcast receiver 1 of the present embodiment is mounted in a mobile body such as an automobile, if it has become necessary to newly obtain an initial synchronism due to an influence such as multipass fading or the like, the receiver 1 is preferable to be used as a so-called mobile digital broadcast receiver.

Further, although the receiver 1 of the present embodiment is fabricated in a manner such that its channel decoders 5a, 5b and the source decoder 6 are formed of so-called hard wear, the channel decoders 5a, 5b and the source decoder 6 can also be formed in the following manner.
Namely, it is possible for the channel decoders 5a, 5b and the source decoder 6 to be formed of integrated circuit or the like having operation processing function, such as microprocessor (MPU) and digital signal processor (DSP), thereby exhibiting the functions of the foregoing channel decoders 5a, 5b and the source decoder 6 by executing a predetermined system program (computer program).

Moreover, it is also possible for the receiver 1 of the present embodiment to be provided with an information reproducing device for reading and thus reproducing information recorded in storage media (information recording and reproducing medium) such as CD, DVD or semiconductor memory. In this way, the information reproducing device can reproduce information recording medium having stored therein a computer program which has functions of the foregoing channel decoders 5a and 5b, the source decoder 6, and the controller 7. Further, it is also possible to install the foregoing program in the foregoing microprocessor, digital signal processor (DSP) or the like.

## Claims

1. A receiver comprising:
reception means for receiving digital broadcast and outputting modulation signals of at least two channels, said modulation signals being contained in said digital broadcast;
first channel decoder means for obtaining an initial synchronism to decode one modulation signal among said modulation signals outputted from the reception means; and
second channel decoder means for obtaining an initial synchronism to decode another modulation signal of said modulation signals;
wherein said first and second channel decoder means share synchronism detection results in initial synchronism with each other.

2. A receiving method comprising:
a receiving process of receiving digital broadcast and outputting modulation signals of at least two channels, said modulation signals being contained in said digital broadcast;
a first channel decoder process of obtaining an initial synchronism to decode one modulation signal among said modulation signals; and
a second channel decoder process of obtaining an initial synchronism to decode another modulation signal of said modulation signals;
wherein said first and second channel decoder processes share synchronism detection results in initial synchronism with each other.

3. A program for use in a receiver which includes reception means for receiving digital broadcast and outputting modulation signals of at least two channels, said modulation signals being contained in said digital broadcast, while said receiver being provided to apply a computer processing to said modulation signals, said program comprising:
a first channel decoder step of obtaining an initial synchronism to decode one modulation signal among said modulation signals outputted from said reception means; and
a second channel decoder step of obtaining an initial synchronism to decode another modulation signal of said modulation signals;
wherein said first and second channel decoder steps share synchronism detection results in initial synchronism with each other.

4. An information recording and reproducing medium having recorded therein a program recited in claim 3.
